# EUROPÄISCHE PATENTSCHRIFT

(11) **EP 2 836 386 B1**
(45) Veröffentlichungstag und Bekanntmachung des Hinweises auf die Patenterteilung: **08.05.2019**
(21) Anmeldenummer: 13711639.8
(22) Anmeldetag: 19.03.2013
(51) Int. Cl.: B60K 35/00, G06F 3/01, G06F 3/048

(54) **VERFAHREN, VORRICHTUNG UND COMPUTERPROGRAMMPRODUKT ZUM STEUERN ZUMINDEST EINER FUNKTION ZUMINDEST EINES ANZEIGEGERÄTES FÜR EINEN INNENRAUM EINES FAHRZEUGS**
METHOD, DEVICE AND COMPUTER PROGRAM PRODUCT FOR CONTROLLING AT LEAST ONE FUNCTION OF AT LEAST ONE DISPLAY FOR A VEHICLE INTERIOR
PROCÉDÉ, DISPOSITIF ET PRODUIT DE PROGRAMME D'ORDINATEUR POUR COMMANDER AU MOINS UNE FONCTION D'AU MOINS UNE AFFICHAGE POUR L'INTÉRIEUR D'UN VÉHICULE

(30) Priorität: 13.04.2012 DE 102012206030
(43) Veröffentlichungstag der Anmeldung: 18.02.2015
(73) Patentinhaber: Robert Bosch GmbH, 70442 Stuttgart (DE)
(72) Erfinder: KLEINE-BESTEN, Thomas, 38116 Braunschweig (DE); SCHIEK, Ulrich, 30519 Hannover (DE)
(86) Internationale Anmeldenummer: PCT/EP2013/055697
(87) Internationale Veröffentlichungsnummer: WO 2013/152930

(56) Entgegenhaltungen:
- EP-A1- 1 962 509
- EP-A2- 2 567 869
- DE-A1-102008 038 816
- DE-A1-102009 008 492
- US-A1- 2010 238 280
- US-A1- 2011 175 932

## Beschreibung

### Stand der Technik

Die vorliegende Erfindung bezieht sich auf ein Verfahren zum Steuern zumindest einer Funktion zumindest eines Anzeigegerätes für einen Innenraum eines Fahrzeugs, auf eine Vorrichtung zum Steuern zumindest einer Funktion zumindest eines Anzeigegerätes für einen Innenraum eines Fahrzeugs und auf ein entsprechendes Computerprogrammprodukt.

Zum automatischen Dimmen von Anzeigen wird beispielsweise eine Helligkeit von Displays mit Hilfe von Helligkeitssensoren gesteuert und automatisch der Umgebungshelligkeit angepasst. Ansonsten werden häufig auch Zeitautomatiken eingesetzt, die ein Display nach einer festgelegten Zeit ohne Interaktion ausschalten. Auch wird die Blickrichtung eines Menschen genutzt, um z. B. behinderten Menschen zu ermöglichen, mit entsprechenden Geräten einen Cursor auf einem Monitor steuern. Nicht die Blickrichtung, sondern die Augentätigkeit wird z. B. der WO 2009/084042 A1 genutzt, um eine Müdigkeit eines Fahrers zu erkennen.

Die US 2010/238280 A1 offenbart eine Vorrichtung zum Bedienen von Fahrzeuggeräten, bei der vorgesehen ist, eine Hand eines Bedieners zu fotografieren, eine Blickrichtung eines Fahrers zu erfassen und einen Umriss der Hand einem Bedienbildschirm einer Bildanzeigeeinheit, auf welche die Blickrichtung gerichtet ist, zu überlagern. In der EP 1 962 509 A1 ist eine Fahrzeugumgebungsanzeigeeinrichtung gezeigt, bei der automatisch ein zu einer aus Blickrichtung und Gesichtsrichtung eines Fahrers abgeleiteten Absicht des Fahrers passendes Fahrzeugumgebungsbild angezeigt wird. Die US 2011/175932 A1 betrifft Systeme und Verfahren zum Unterstützen eines Benutzers beim Interagieren mit einer grafischen Benutzeroberfläche durch Kombinieren einer augenbasierten Eingabe mit einer Eingabe z. B. zur Auswahl und Aktivierung von Objekten sowie Ausführung darauf bezogener kontextueller Handlungen. In der DE 10 2009 008492 A1 ist ein Kraftfahrzeug mit einer Wiedergabeeinrichtung zur in Abhängigkeit der erfassten Sitzposition des Fahrers steuerbaren Wiedergabe von Bildinformationen offenbart. Die DE 10 2008 038816 A1 zeigt ein Verfahren und eine Vorrichtung zur Unterstützung des Betriebs eines Fahrzeugs, wobei ein Zustand eines Fahrers des Fahrzeugs hinsichtlich des Betriebs des Fahrzeugs erfasst wird sowie eine Fahrsituation, in welcher sich das Fahrzeug gerade befindet, erfasst wird, um abhängig davon mindestens eine Maßnahme durchzuführen. In der EP 2 567 869 A2 ist eine fahrzeugmontierte, vorrichtungsidentifizierende Vorrichtung zum Identifizieren fahrzeugmontierter Vorrichtungen basierend auf einer Blickrichtung eines Fahrzeuglenkers beschrieben, wobei verhindert werden kann, dass eine fahrzeugmontierte Vorrichtung fälschlicherweise als ein Steuerziel beurteilt wird.

### Offenbarung der Erfindung

Vor diesem Hintergrund werden mit der vorliegenden Erfindung ein verbessertes Verfahren sowie eine verbesserte Vorrichtung zum Steuern zumindest einer Funktion zumindest eines Anzeigegerätes für einen Innenraum eines Fahrzeugs und ein verbessertes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Die vorliegende Erfindung schafft ein Verfahren zum Steuern zumindest einer Funktion zumindest eines Anzeigegerätes gemäß Anspruch 1.

Bei dem Fahrzeug kann es sich um ein Kraftfahrzeug handeln, insbesondere ein straßengebundenes Kraftfahrzeug, wie ein Personenkraftwagen, ein Lastkraftwagen oder ein sonstiges Nutzfahrzeug. Bei dem Anzeigegerät kann es sich um einen Bildschirm, ein Fahrtinstrument oder eine sonstige Anzeigeeinrichtung handeln. Eine Funktion des Anzeigegerätes kann einer Charakteristik einer Anzeige des Anzeigegerätes zugeordnet sein. Ein Anzeigemodus kann der Steuerung einer oder mehrerer Funktionen des Anzeigegerätes zugeordnet sein. Ein Anzeigemodus kann eine oder mehrere Betriebsarten und/oder Steuerungsarten für das Anzeigegerät vorgeben oder repräsentieren. Dabei kann ein Anzeigemodus innerhalb von Grenzwerten variable Steuerparameter aufweisen. Der erste Anzeigemodus kann ausgebildet sein, um eine Ablesbarkeit eines Anzeigegerätes für den zumindest einen Fahrzeuginsassen zu optimieren, dessen Blickrichtung aktuell auf das zumindest eine Anzeigegerät gerichtet ist. Bei der Fahrzeugkamera kann es sich um eine Standbildkamera und/oder Videokamera handeln. Die Fahrzeugkamera kann eine Schnittstelle zum Ausgeben von Bildinformation aufweisen. Beispielsweise kann die Fahrzeugkamera eingesetzt werden, um den Innenraum des Fahrzeugs zu überwachen, insbesondere um eine Blickrichtung des zumindest einen Fahrzeuginsassen erkennen. Die Fahrzeugkamera kann eine Bildverarbeitungseinrichtung zur Verarbeitung von Bilddaten aufweisen, die von einem Sensor der Kamera erfasst wurden. Die Blickrichtung kann in Form eines Blickwinkels oder einer sonstigen Größe angegeben sein. Bei dem zumindest einen Fahrzeuginsassen kann es sich um einen Fahrer des Fahrzeugs und/oder einen Beifahrer bzw. Passagier in dem Fahrzeug handeln. Es können mehrere Fahrzeuginsassen, mehrere Blickrichtungen, mehrere Anzeigegeräte und/oder mehrere Gerätebereiche vorliegen. Ein einzelnes der Anzeigegeräte kann in einem einzelnen der Gerätebereiche angeordnet sein. In einem Gerätebereich kann zumindest ein Anzeigegerät angeordnet sein. Es kann eine Blickrichtung eines Fahrers und/oder eine Blickrichtung eines Beifahrers erkennbar sein. Auch kann eine erkannte Blickrichtung oder können alle erkannten Blickrichtungen auf ein Anzeigegerät oder auf unterschiedliche Anzeigegeräte gerichtet sein. Somit kann im Schritt des Ermittelns auch ermittelt werden, ob und welche der mittels der zumindest einen Fahrzeugkamera erkannten Blickrichtungen der Fahrzeuginsassen auf welchen Gerätebereich bzw. welches Anzeigegerät des Innenraums des Fahrzeugs gerichtet sind. Es kann im Schritt des Ermittelns auch ermittelt werden, ob und auf welchen Gerätebereich des Innenraums des Fahrzeugs eine mittels der zumindest einen Fahrzeugkamera erkannte Blickrichtung eines Fahrzeuginsassen gerichtet ist.

Die vorliegende Erfindung schafft ferner eine Vorrichtung zum Steuern zumindest einer Funktion zumindest eines Anzeigegerätes für einen Innenraum eines Fahrzeugs, wobei das Fahrzeug zumindest eine Fahrzeugkamera aufweist, wobei die Vorrichtung ausgebildet ist, um die Schritte des oben genannten Verfahrens durchzuführen bzw. umzusetzen. Insbesondere kann die Vorrichtung Einrichtungen aufweisen, die ausgebildet sind, um je einen Schritt des oben genannten Verfahrens auszuführen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät bzw. Steuergerät verstanden werden, das Bilddaten empfängt und Steuersignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung eines oben genannten Verfahrens verwendet wird, wenn das Programm auf einem Computer oder einer Vorrichtung ausgeführt wird.

Gemäß Ausführungsformen der vorliegenden Erfindung wird insbesondere die Möglichkeit gegeben, einen Zustand eines Gerätes abhängig von einer aktuellen Blickrichtung der Benutzer zu steuern. Zu den zu steuernden Eigenschaften gehört beispielsweise die Helligkeit von Anzeigen oder das teilweise oder vollständige An- und Abschalten von Anzeigen und damit verbundenen Geräten. Somit ist die Möglichkeit einer Steuerung, insbesondere einer automatischen Steuerung, basierend auf der Blickrichtung zumindest eines Fahrzeuginsassen, insbesondere eines Fahrzeuglenkers, geschaffen.

Ein Vorteil der vorliegenden Erfindung liegt darin, dass hinsichtlich des zumindest einen Anzeigegerätes eine Energieeinsparung ermöglicht, eine Ablesbarkeit verbessert und ein Bedienkomfort erhöht werden können. So ist beispielsweise ein schnelles, komfortables und bedarfsgerechtes An- und Abschalten oder Dimmen von Anzeigegeräten ermöglicht. Ferner ergibt sich eine verringerte Blendwirkung bei von der Anzeige abgewandtem Blick insbesondere in Nachtsituationen im Fahrzeug. Somit kann die Fahrsicherheit erhöht werden. Bei permanentem Blicckontakt können Anzeigen angeschaltet bleiben, ohne dass ein Nutzer weitere Interaktionen durchführen muss. Auch eine komfortable Realisierung von Mehrnutzer-Interaktionen und Zuordnung von Nutzern zu angezeigten Inhalten ist möglich. Hervorzuheben ist insbesondere die Möglichkeit, abhängig von der Blickrichtung ein automatisches Dimmen von Anzeigen zu bewirken.

Es ergeben sich somit mehrere Vorteile aus der Tatsache, die Helligkeit bzw. den Schaltzustand von Anzeigegeräten in Abhängigkeit von einer Blickrichtung eines Nutzers bzw. Fahrzeuginsassen zu steuern. Ein wichtiger Vorteil, insbesondere bei einem batteriebetriebenen mobilen Endgerät als Anzeigegerät, liegt in der Begrenzung des Stromverbrauchs und die Anpassung der Helligkeit der Anzeige an die Blickrichtung, um so die Lesbarkeit zu optimieren. Der weitere Vorteil der Blendungsreduzierung oder Blendungsvermeidung hat in Fahrzeugumgebungen besondere Relevanz, da in Nachtfahrsituationen die Verhinderung von Blendeffekten durch zu helle Anzeigen eine hohe Priorität hat. Herkömmlicherweise kann die Helligkeit von Displays häufig mit Hilfe von Helligkeitssensoren gesteuert und der Umgebungshelligkeit angepasst werden. Ein vollständiges Ausschalten von Anzeigen ist herkömmlicherweise oftmals nicht möglich, da der Nutzer kontinuierlichen Zugriff auf die Informationen haben soll, z. B. bei Navigationssystemen. Gemäß Ausführungsformen der vorliegenden Erfindung jedoch wird auch die Abschaltung von Anzeigegeräten durch das Steuern in Abhängigkeit von der Blickrichtung ermöglicht. Des Weiteren werden herkömmlicherweise häufig auch Zeitautomatiken eingesetzt, die ein Anzeigegerät nach einer festgelegten Zeit ohne Interaktion ausschalten. Dies kann aber in Einzelfällen den Nutzer stören, z. B. bei Lesevorgängen ohne weitere Interaktion. Auch dieses Problem des unerwünschten Abschaltens von Anzeigegeräten kann durch Ausführungsformen der vorliegenden Erfindung gelöst werden, da ein Hinwenden des Blicks ein Abschalten verhindern bzw. ein Anschalten auslösen kann.

Gemäß einer Ausführungsform des Verfahrens kann im Schritt des Ansteuerns das zumindest eine Anzeigegerät in einem zweiten Anzeigemodus angesteuert werden, wenn die erkannte Blickrichtung des zumindest einen Fahrzeuginsassen nicht auf den Gerätebereich gerichtet ist. Dabei kann sich der zweite Anzeigemodus von dem ersten Anzeigemodus unterscheiden. Der zweite Anzeigemodus kann beispielsweise ausgebildet sein, um eine Energiesparfunktion des zumindest einen Anzeigegeräts auszulösen und/oder eine Helligkeit des zumindest einen Anzeigegeräts zu verringern. Eine solche Ausführungsform bietet den Vorteil, dass für den Fall eines Abwendens bzw. Nichthinwendens der Blickrichtung relativ zu dem zumindest einen Anzeigegerät das zumindest eine Anzeigegerät angesteuert werden kann, um eine Energieeinsparung, Blendreduzierung bzw. Blendvermeidung zu ermöglichen.

Auch kann im Schritt des Ermittelns auch ermittelt werden, ob die erkannte Blickrichtung des zumindest einen Fahrzeuginsassen innerhalb eines Toleranzbereichs um den Gerätebereich auf den Gerätebereich gerichtet ist. Der Toleranzbereich ist somit eine flächenmäßige bzw. winkelmäßige Erweiterung des Gerätebereichs. Eine solche Ausführungsform bietet den Vorteil, dass Abweichungen z. B. aufgrund von schwierigen Lichtverhältnissen bei dem Schritt des Ermittelns mittels des Toleranzbereichs kompensiert werden können. So kann eine Ablesbarkeit des zumindest einen Anzeigegeräts weiter verbessert werden, indem beispielsweise im Schritt des Ansteuerns bereits der erste Anzeigemodus verwendet werden kann, wenn die Blickrichtung innerhalb des Toleranzbereichs liegt.

Insbesondere kann im Schritt des Ansteuerns des zumindest einen Anzeigegeräts in einem Anzeigemodus eine Anzeigehelligkeit, ein Betriebszustand, eine Verweilzeit in einem Betriebszustand und/oder eine grafische Benutzeroberfläche des zumindest einen Anzeigegeräts gesteuert werden. Der erste Anzeigemodus kann dabei insbesondere ausgebildet sein, um eine Anzeigehelligkeit zu erhöhen, einen eingeschalteten Betriebszustand zu bewirken, eine Verweilzeit in dem eingeschalteten Betriebszustand und/oder bei erhöhter Anzeigehelligkeit zu verlängern, und/oder die grafische Benutzeroberfläche an den oder die Fahrzeuginsassen anzupassen, dessen Blickrichtung auf das Anzeigegerät gerichtet ist. Der zweite Anzeigemodus kann beispielsweise ausgebildet sein, um eine Anzeigehelligkeit zu verringern und/oder einen ausgeschalteten Betriebszustand, Energiesparzustand oder Bereitschaftszustand zu bewirken. Eine solche Ausführungsform bietet den Vorteil, dass eine Ablesbarkeit und/oder eine Blendungsvermeidung verbessert werden kann.

Gemäß einer Ausführungsform kann im Schritt des Ermittelns auch ermittelt werden, ob sich die erkannte Blickrichtung des zumindest einen Fahrzeuginsassen in den Gerätebereich oder aus dem Gerätebereich bewegt. Dabei kann eine erste Blickrichtung eines Fahrzeuginsassen zu einem ersten Zeitpunkt mit einer zweiten Blickrichtung eines Fahrzeuginsassen zu einem zweiten Zeitpunkt verglichen werden. Es kann auch eine Bewegung der Blickrichtung geschätzt werden, sodass eine Vorhersage über einen Blickrichtungspfad getroffen werden kann. Hierbei können auch für Fahrsituationen typische Bewegungsmuster verwendet werden. Eine solche Ausführungsform bietet den Vorteil, dass eine Steuerung des zumindest einen Anzeigegeräts, und damit eine Ablesbarkeit und/oder eine Blendungsvermeidung, verbessert werden kann.

Dabei kann im Schritt des Ansteuerns des zumindest einen Anzeigegeräts der Anzeigemodus verändert werden, wenn sich die erkannte Blickrichtung des zumindest einen Fahrzeuginsassen in den Gerätebereich oder aus dem Gerätebereich bewegt. Hierbei kann zwischen dem ersten Anzeigemodus und dem zweiten Anzeigemodus umgeschaltet werden. Auch kann der Anzeigemodus kontinuierlich verändert werden. Beispielsweise kann der erste Anzeigemodus zu dem zweiten Anzeigemodus geändert werden, wenn sich die erkannte Blickrichtung des zumindest einen Fahrzeuginsassen aus dem Gerätebereich bewegt. Beispielsweise kann der zweite Anzeigemodus zu dem ersten Anzeigemodus geändert werden, wenn sich die erkannte Blickrichtung des zumindest einen Fahrzeuginsassen in den Gerätebereich bewegt. Zu den vorteilhaften Eigenschaften einer solchen Ausführungsform gehört unter anderem, dass z. B. bei einem Wegschauen des zumindest einen Fahrzeuginsassen bzw. des Nutzers/der Nutzer von dem zumindest einen Anzeigegerät ein frühzeitiges Abschalten des Anzeigegerätes, ein teilweises oder vollständiges Abdunkeln des Anzeigegerätes und/oder eine Steuerung der Anzeigehelligkeit in Abhängigkeit eines Winkels zwischen Blickrichtung und Anzeigegerät mit den Vorteilen Energieeinsparung, Reduzierung der Blendwirkung bzw. sanfter Helligkeitsübergänge bewirkt werden können. Bei einer Zuwendung des Blicks des zumindest einen Fahrzeuginsassen zu dem zumindest einen Anzeigegerät können ein Wiedereinschalten der Anzeige und/oder ein Aufhellen bzw. heller Dimmen der Anzeige mit dem Vorteil bedarfsgerechter und guter Ablesbarkeit erfolgen. Bei konstanter Zuwendung des Blicks des zumindest einen Fahrzeuginsassen zu dem zumindest einen Anzeigegerät kann eine Nichtaktivierung von Ausschaltmechanismen bewirkt werden, sodass eine gute Ablesbarkeit erhalten bleibt. Bei mehreren Nutzern bzw. Fahrzeuginsassen kann eine Aktivierung bzw. Deaktivierung von Funktionen bewirkt werden, wie etwa ein Split-Screen zu Single-Screen Übergang, wenn sich mehrere Fahrzeuginsassen ein Anzeigegerät teilen. Hierbei kann auch berücksichtigt werden, welcher Fahrzeuginsasse welchen angezeigten Inhalten oder Anzeigen zugeordnet ist.

Hierbei kann im Schritt des Ansteuerns der Anzeigemodus nach Ablauf einer Entprellzeit verändert werden. Bei der Entprellzeit kann es sich somit um eine Verzögerungszeit, Umschaltverzögerung bzw. Hysterese handeln. Somit können Übergänge bzw. Veränderungen zwischen Anzeigemodi, etwa bei einem Wechsel zwischen Blickzuwendung und Blickabwendung, mittels entsprechender Zeitkonstanten entprellt werden, um ein unruhiges Anzeigeverhalten zu verhindern und somit Ablesbarkeit, Sicherheit und Komfort zu erhöhen.

Des Weiteren kann ein Schritt des Erkennens einer Blickrichtung zumindest eines Fahrzeuginsassen mittels der zumindest einen Fahrzeugkamera vorgesehen sein. Eine solche Ausführungsform bietet den Vorteil, dass das Steuern des zumindest einen Anzeigegeräts auf einer zuverlässigen Datengrundlage erkannter Blickrichtungen erfolgen kann.

Auch können die Schritte des Verfahrens wiederholt ausgeführt werden, wenn sich das zumindest eine Anzeigegerät und/oder das Fahrzeug in Betrieb befindet.

Die Erfindung wird anhand der beigefügten Zeichnungen beispielhaft näher erläutert. Es zeigen:
- Fig. 1: eine schematische Darstellung eines Fahrzeugs mit einer Vorrichtung gemäß einem Ausführungsbeispiel der vorliegenden Erfindung; und
- Fig. 2: ein Ablaufdiagramm eines Verfahrens gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

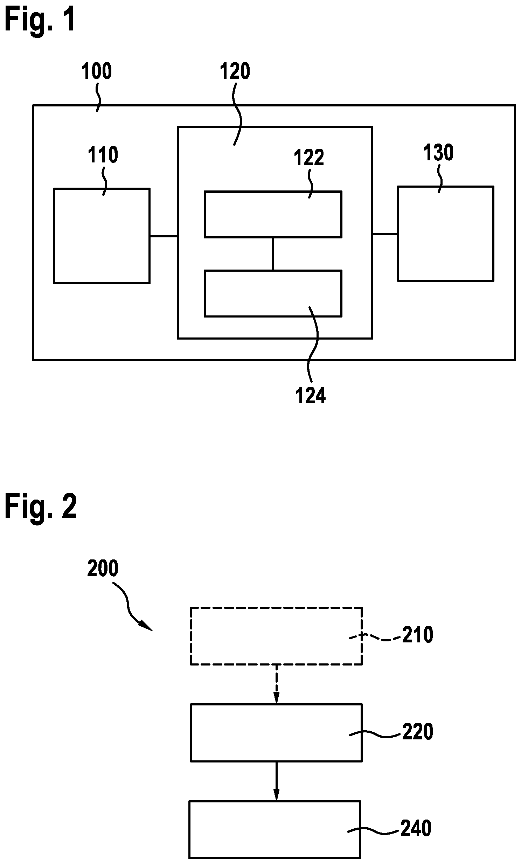

Fig. 1 zeigt eine schematische Darstellung eines Fahrzeugs mit einer Vorrichtung zum Steuern zumindest einer Funktion zumindest eines Anzeigegerätes für einen Innenraum des Fahrzeugs gemäß einem Ausführungsbeispiel der vorliegenden Erfindung. Gezeigt sind eine Fahrzeugkamera 110, die Vorrichtung 120, eine Ermittlungseinrichtung 122, eine Ansteuereinrichtung 124 und ein Anzeigegerät 130. Das Fahrzeug 100 weist die Fahrzeugkamera 110, die Vorrichtung 120 und das Anzeigegerät 130 auf. Die Vorrichtung 120 weist die Ermittlungseinrichtung 122 und die Ansteuereinrichtung 124 auf. Gemäß dem in Fig. 1 gezeigten Ausführungsbeispiel der vorliegenden Erfindung ist die Fahrzeugkamera 110 lediglich beispielhaft getrennt von der Vorrichtung 120 angeordnet dargestellt. Gemäß anderen Ausführungsbeispielen können die Fahrzeugkamera 110 und die Vorrichtung 120 auch kombiniert sein. Gemäß weiteren Ausführungsbeispielen können die Vorrichtung 120 und das Anzeigegerät 130 kombiniert sein. Auch wenn es in Fig. 1 nicht gezeigt ist, können gemäß anderen Ausführungsbeispielen auch mehrere Fahrzeugkameras 110 und/oder mehrere Anzeigegeräte 130 vorgesehen sein.

Die Fahrzeugkamera 110 kann eine Schnittstelle zum Ausgeben von Bildinformation aufweisen. Beispielsweise kann die Fahrzeugkamera 110 ausgebildet sein, um den Innenraum des Fahrzeugs 100 zu überwachen, insbesondere eine Aufnahme des Innenraums des Fahrzeugs 100 in Gestalt der Bildinformation zu erzeugen. Die Fahrzeugkamera 110 kann eine Bildverarbeitungseinrichtung zur Verarbeitung der Bildinformation aufweisen, die von einem Sensor der Fahrzeugkamera 110 erfasst wurden. Die Bildverarbeitungseinrichtung kann ausgebildet sein, um basierend auf der Bildinformation eine Blickrichtung des zumindest einen Fahrzeuginsassen erkennen. Ferner ist die Fahrzeugkamera 110 ausgebildet, um die erkannte Blickrichtung in Gestalt eines Signals an die Vorrichtung 120 auszugeben.

Die Vorrichtung 110 ist mittels einer Kommunikationsschnittstelle, beispielsweise einer elektrischen Leitung oder dergleichen, mit der Fahrzeugkamera 110 verbunden. Die Vorrichtung 110 ist ausgebildet, um die erkannte Blickrichtung in Gestalt des Signals von der Fahrzeugkamera 110 zu empfangen.

Die Ermittlungseinrichtung 122 der Vorrichtung 110 ist ausgebildet, um zu ermitteln, ob eine mittels der Fahrzeugkamera 110 erkannte Blickrichtung des zumindest einen Fahrzeuginsassen auf einen Gerätebereich des Innenraums des Fahrzeugs 100 gerichtet ist, in dem das Anzeigegerät 130 verbaut ist. Dabei kann die Ermittlungseinrichtung 122 kann auch ausgebildet sein, um zu ermitteln, ob die erkannte Blickrichtung des zumindest einen Fahrzeuginsassen innerhalb eines Toleranzbereichs um den Gerätebereich auf den Gerätebereich gerichtet ist. Die Ermittlungseinrichtung 122 kann auch ausgebildet sein, um zu ermitteln, ob sich die erkannte Blickrichtung des zumindest einen Fahrzeuginsassen in den Gerätebereich oder aus dem Gerätebereich bewegt. Die Ermittlungseinrichtung 122 kann ein Ermittlungsergebnis in Gestalt eines Signals an die Ansteuereinrichtung 124 weiterleiten.

Die Ansteuereinrichtung 124 der Vorrichtung 110 ist ausgebildet, um das Anzeigegerät 130 in einem ersten Anzeigemodus anzusteuern, wenn die erkannte Blickrichtung des zumindest einen Fahrzeuginsassen auf den Gerätebereich gerichtet ist, um die zumindest eine Funktion des Anzeigegerätes 130 zu steuern. Die Ansteuereinrichtung 124 ist auch ausgebildet, um das Anzeigegerät 130 in einem zweiten Anzeigemodus anzusteuern, wenn die erkannte Blickrichtung des zumindest einen Fahrzeuginsassen nicht auf den Gerätebereich gerichtet ist. Insbesondere ist die Ansteuereinrichtung 124 ausgebildet, um eine Anzeigehelligkeit, ein Betriebszustand, eine Verweilzeit in einem Betriebszustand und/oder eine grafische Benutzeroberfläche des Anzeigegeräts 130 zu steuern. Ferner kann die Ansteuereinrichtung 124 ausgebildet sein, um den Anzeigemodus zu verändern, wenn sich die erkannte Blickrichtung des zumindest einen Fahrzeuginsassen in den Gerätebereich oder aus dem Gerätebereich bewegt. Dabei kann die Ansteuereinrichtung 124 ferner ausgebildet sein, um den Anzeigemodus nach Ablauf einer Entprellzeit zu verändern.

Die Vorrichtung 110 ist ausgebildet, um basierend auf dem Anzeigemodus ein Steuersignal zum Steuern des Anzeigegeräts 130 zu erzeugen. Die Vorrichtung 110 ist mittels einer weiteren Kommunikationsschnittstelle mit dem Anzeigegerät 130 verbunden. Die Vorrichtung 110 ist ausgebildet, um das basierend auf dem Anzeigemodus erzeugte Steuersignal an das Anzeigegerät 130 auszugeben.

Das Anzeigegerät 130 ist ausgebildet, um basierend auf dem Steuersignal von der Vorrichtung 120 die zumindest eine Funktion zu realisieren. So kann beispielsweise mittels der Vorrichtung 120 bewirkt werden, dass die Anzeigehelligkeit, der Betriebszustand, die Verweilzeit in einem Betriebszustand und/oder die grafische Benutzeroberfläche des Anzeigegeräts 130 unter Verwendung der erkannten Blickrichtung angepasst wird bzw. werden.

Fig. 2 zeigt ein Ablaufdiagramm eines Verfahrens 200 gemäß einem Ausführungsbeispiel der vorliegenden Erfindung. Bei dem Verfahren 200 handelt es sich um ein Verfahren zum Steuern zumindest einer Funktion zumindest eines Anzeigegerätes für einen Innenraum eines Fahrzeugs. Dabei weist das Fahrzeug zumindest eine Fahrzeugkamera auf. Das Verfahren 200 weist einen Schritt des Ermittelns 220 auf, ob eine mittels der zumindest einen Fahrzeugkamera erkannte Blickrichtung zumindest eines Fahrzeuginsassen auf einen Gerätebereich des Innenraums des Fahrzeugs gerichtet ist, in dem das zumindest eine Anzeigegerät verbaut ist. Das Verfahren 200 weist auch einen Schritt des Ansteuerns 240 des zumindest einen Anzeigegeräts in einem ersten Anzeigemodus auf, wenn die erkannte Blickrichtung des zumindest einen Fahrzeuginsassen auf den Gerätebereich gerichtet ist, um die zumindest eine Funktion des zumindest einen Anzeigegerätes zu steuern. Das Verfahren 200 weist auch einen optionalen Schritt des Erkennens 210 der Blickrichtung zumindest eines Fahrzeuginsassen mittels der zumindest einen Fahrzeugkamera auf.

Das in Fig. 2 dargestellte Verfahren 200 kann in Verbindung mit einer Vorrichtung, wie der Vorrichtung aus Fig. 1, sowie in Verbindung mit zumindest einer Fahrzeugkamera vorteilhaft ausgeführt werden. Insbesondere können die Schritte des Verfahrens 200 in Verbindung mit der Ermittlungseinrichtung sowie der Ansteuereinrichtung aus Fig. 1 vorteilhaft ausgeführt werden.

Im Folgenden werden Ausführungsbeispiele der vorliegenden Erfindung unter Bezugnahme auf die Figuren 1 und 2 zusammenfassend nochmals mit anderen Worten erläutert.

Es können eine oder mehrere Fahrzeugkameras 110 zum Erkennen der Blickrichtung eines oder mehrerer Nutzer bzw. Fahrzeuginsassen vorgesehen sein. Die Ermittlungseinrichtung 122 ist ausgebildet, um die Blickrichtung(en) in räumliche Relation zu den vorhandenen Anzeigegeräten 130 zu setzen und damit eine Zuordnung zwischen Nutzern und Anzeigegeräten 130 herzustellen. Die Ansteuereinrichtung 124 ist ausgebildet, um eine Helligkeit der Anzeige bzw. das Abschaltens oder die Aktivierung zumindest eines Anzeigegerätes 130 entsprechend der Nähe des Blickes bzw. Blickwinkels in Relation zu einer Position des zumindest einen Anzeigegerätes 130 zu steuern. Ein optionales Steuern von Inhalten der Anzeigen entsprechend der jeweils aktiven, also aktiv zu dem Anzeigegerät 130 hinsehenden Nutzer ist ebenfalls möglich. Hierzu kann die Vorrichtung 130 eine Information erhalten, welche Nutzer verfügbar sind und welche gerade aktiv sind. Das Anzeigegerät 130 kann ausgebildet sein, um extern oder intern gesteuert zu werden. Die Elemente 110 bis 130 können alle in einem Gerät integriert sein, z. B. in einem Mobiltelefon, oder mehr oder weniger in einzelne vernetzte Geräte aufgeteilt sein.

Die Vorrichtung 120 kann auch mit weiteren Mechanismen zur Steuerung vorteilhaft kombiniert werden, wie etwa einem Annäherungssensor zur Berücksichtigung eines Abstandes des Nutzers zum Anzeigegerät 130, einer Zeitsteuerung und/oder einer Helligkeitssteuerung für das Anzeigegerät 130 über die Umgebungshelligkeit. Die Vorrichtung 120 kann Einsatz bei allen Endgerätetypen mit einer Anzeige finden, wenn eine Kamera zur Blickverfolgung verfügbar ist. Besondere Vorteile ergeben sich beim Einsatz der Vorrichtung 120 in Kraftfahrzeugen, da hier eine Blendwirkung des Anzeigegerätes 130 in Nachtfahrsituationen verringert werden kann, sowie bei mobilen Endgeräten, da hier Energie eingespart werden kann. Ausführungsbeispiele der vorliegenden Erfindung ermöglichen somit ein Dimmen, An-/Abschalten eines Anzeigegerätes 130 und/oder einen Wechsel zwischen Ein- und Mehrbenutzermodus in Abhängigkeit von der Blickrichtung zumindest eines Nutzers bzw. Fahrzeuginsassen.

## Patentansprüche

1. Verfahren (200) zum Steuern zumindest einer Funktion zumindest eines Anzeigegerätes (130) für einen Innenraum eines Fahrzeugs (100), wobei das Fahrzeug (100) zumindest eine Fahrzeugkamera (110) aufweist, wobei das Verfahren (200) folgende Schritte aufweist:
Ermitteln (220), ob eine mittels der zumindest einen Fahrzeugkamera (110) erkannte Blickrichtung zumindest eines Fahrzeuginsassen auf einen Gerätebereich des Innenraums des Fahrzeugs (100) gerichtet ist, in dem das zumindest eine Anzeigegerät (130) verbaut ist; und
Ansteuern (240) des zumindest einen Anzeigegeräts (130) in einem ersten Anzeigemodus, wenn die erkannte Blickrichtung des zumindest einen Fahrzeuginsassen auf den Gerätebereich gerichtet ist, um die zumindest eine Funktion des zumindest einen Anzeigegerätes (130) zu steuern, wobei eine Anzeigehelligkeit, ein Betriebszustand und/oder eine Verweilzeit in einem Betriebszustand des zumindest einen Anzeigegeräts (130) gesteuert wird, wobei der Betriebszustand einen eingeschalteten oder ausgeschalteten Zustand der Anzeigeeinheit (130) repräsentiert,
und wobei im Schritt des Ermittelns (220) Blickrichtungen von mehreren Fahrzeuginsassen erkannt werden, um eine Zuordnung zwischen Fahrzeuginsassen und Anzeigegeräten (130) herzustellen, wobei im Schritt des Ansteuerns (240) eine Helligkeit einer Anzeige, ein Abschalten oder eine Aktivierung eines der Blickrichtung zugeordneten Anzeigegerätes (130) gesteuert wird.

2. Verfahren (200) gemäß Anspruch 1, **dadurch gekennzeichnet, dass** im Schritt des Ansteuerns (240) das zumindest eine Anzeigegerät (130) in einem zweiten Anzeigemodus angesteuert wird, wenn die erkannte Blickrichtung des zumindest einen Fahrzeuginsassen nicht auf den Gerätebereich gerichtet ist.

3. Verfahren (200) gemäß einem der vorangegangenen Ansprüche, **dadurch gekennzeichnet, dass** im Schritt des Ermittelns (220) auch ermittelt wird, ob die erkannte Blickrichtung des zumindest einen Fahrzeuginsassen innerhalb eines Toleranzbereichs um den Gerätebereich auf den Gerätebereich gerichtet ist.

4. Verfahren (200) gemäß einem der vorangegangenen Ansprüche, **dadurch gekennzeichnet, dass** im Schritt des Ansteuerns (240) des zumindest einen Anzeigegeräts (130) in einem Anzeigemodus eine grafische Benutzeroberfläche des zumindest einen Anzeigegeräts (130) gesteuert wird.

5. Verfahren (200) gemäß einem der vorangegangenen Ansprüche, **dadurch gekennzeichnet, dass** im Schritt des Ermittelns (220) auch ermittelt wird, ob sich die erkannte Blickrichtung des zumindest einen Fahrzeuginsassen in den Gerätebereich oder aus dem Gerätebereich bewegt.

6. Verfahren (200) gemäß Anspruch 5, **dadurch gekennzeichnet, dass** im Schritt des Ansteuerns (240) des zumindest einen Anzeigegeräts der Anzeigemodus verändert wird, wenn sich die erkannte Blickrichtung des zumindest einen Fahrzeuginsassen in den Gerätebereich oder aus dem Gerätebereich bewegt.

7. Verfahren (200) gemäß Anspruch 6, **dadurch gekennzeichnet, dass** im Schritt des Ansteuerns (240) der Anzeigemodus nach Ablauf einer Entprellzeit verändert wird.

8. Verfahren (200) gemäß einem der vorangegangenen Ansprüche, **gekennzeichnet durch** einen Schritt des Erkennens (210) einer Blickrichtung zumindest eines Fahrzeuginsassen mittels der zumindest einen Fahrzeugkamera (110).

9. Verfahren (200) gemäß einem der vorangegangenen Ansprüche, **dadurch gekennzeichnet, dass** im Schritt des Ermittelns (220) ermittelt wird, dass mehrere Fahrzeuginsassen auf einem Anzeigegerät (130) angezeigte Inhalte teilen, wobei im Schritt des Ansteuerns (240) berücksichtigt wird, welcher Fahrzeuginsasse welchem auf dem Anzeigegerät (130) oder einem darauf angezeigten Inhalt zugeordnet ist oder wobei im Schritt des Ansteuerns (240) in Abhängigkeit von der Blickrichtung des Fahrzeuginsassen ein Wechsel zwischen Ein- und Mehrbenutzermodus angesteuert wird.

10. Vorrichtung (120) zum Steuern zumindest einer Funktion zumindest eines Anzeigegerätes (130) für einen Innenraum eines Fahrzeugs (100), wobei das Fahrzeug (100) zumindest eine Fahrzeugkamera (110) aufweist, wobei die Vorrichtung (120) folgende Merkmale aufweist:
eine Einrichtung zum Ermitteln, ob eine mittels der zumindest einen Fahrzeugkamera (110) erkannte Blickrichtung zumindest eines Fahrzeuginsassen auf einen Gerätebereich des Innenraums des Fahrzeugs (100) gerichtet ist, in dem das zumindest eine Anzeigegerät (130) verbaut ist; und
eine Einrichtung zum Ansteuern des zumindest einen Anzeigegeräts (130) in einem ersten Anzeigemodus, wenn die erkannte Blickrichtung des zumindest einen Fahrzeuginsassen auf den Gerätebereich gerichtet ist, um die zumindest eine Funktion des zumindest einen Anzeigegerätes (130) zu steuern, wobei eine Anzeigehelligkeit, ein Betriebszustand und/oder eine Verweilzeit in einem Betriebszustand des zumindest einen Anzeigegeräts (130) gesteuert wird, wobei der Betriebszustand einen eingeschalteten oder ausgeschalteten Zustand der Anzeigeeinheit repräsentiert
und wobei in der Einrichtung zum Ermitteln Blickrichtungen von mehreren Fahrzeuginsassen erkannt werden, um eine Zuordnung zwischen Fahrzeuginsassen und Anzeigegeräten (130) herzustellen, wobei in der Einrichtung zum Ansteuern eine Helligkeit einer Anzeige, ein Abschalten oder eine Aktivierung eines der Blickrichtung zugeordneten Anzeigegerätes (130) gesteuert wird oder wobei in der Einrichtung zum Ansteuern in Abhängigkeit von der Blickrichtung des Fahrzeuginsassen ein Wechsel zwischen Ein- und Mehrbenutzermodus angesteuert wird.

11. Computerprogrammprodukt mit Programmcode zur Durchführung eines Verfahrens (200) gemäß einem der Ansprüche 1 bis 9, wenn das Programm auf einer Vorrichtung (120) ausgeführt wird.

## Claims

1. Method (200) for controlling at least one function of at least one display device (130) for an interior of a vehicle (100), wherein the vehicle (100) has at least one vehicle camera (110), wherein the method (200) has the following steps of:
determining (220) whether a viewing direction of at least one vehicle occupant, as detected by means of the at least one vehicle camera (110), is directed to a device region of the interior of the vehicle (100) in which the at least one display device (130) is installed; and
controlling (240) the at least one display device (130) in a first display mode if the detected viewing direction of the at least one vehicle occupant is directed to the device region in order to control the at least one function of the at least one display device (130), wherein a display brightness, an operating state and/or a residence time in an operating state of the at least one display device (130) is/are controlled, wherein the operating state represents a switched-on or switched-off state of the display unit (130),
and wherein, in the determining step (220), viewing directions of a plurality of vehicle occupants are detected in order to establish an assignment between vehicle occupants and display devices (130), wherein, in the controlling step (240), a brightness of a display, a switching-off or an activation of a display device (130) assigned to the viewing direction is/are controlled.

2. Method (200) according to Claim 1, **characterized in that,** in the controlling step (240), the at least one display device (130) is controlled in a second display mode if the detected viewing direction of the at least one vehicle occupant is not directed to the device region.

3. Method (200) according to one of the preceding claims, **characterized in that** the determining step (220) also determines whether the detected viewing direction of the at least one vehicle occupant is directed to the device region within a tolerance region around the device region.

4. Method (200) according to one of the preceding claims, **characterized in that,** in the step of controlling (240) the at least one display device (130) in a display mode, a graphical user interface of the at least one display device (130) is controlled.

5. Method (200) according to one of the preceding claims, **characterized in that** the determining step (220) also determines whether the detected viewing direction of the at least one vehicle occupant is moving into the device region or out of the device region.

6. Method (200) according to Claim 5, **characterized in that,** in the step of controlling (240) the at least one display device, the display mode is changed if the detected viewing direction of the at least one vehicle occupant is moving into the device region or out of the device region.

7. Method (200) according to Claim 6, **characterized in that,** in the controlling step (240), the display mode is changed after expiry of a debouncing time.

8. Method (200) according to one of the preceding claims, **characterized by** a step of detecting (210) a viewing direction of at least one vehicle occupant by means of the at least one vehicle camera (110).

9. Method (200) according to one of the preceding claims, **characterized in that** the determining step (220) determines that a plurality of vehicle occupants share contents displayed on a display device (130), wherein the controlling step (240) takes into account which vehicle occupant is assigned to what content displayed on the display device (130) or to a content displayed on the latter, or wherein, in the controlling step (240), a change between a single-user mode and a multi-user mode is controlled on the basis of the viewing direction of the vehicle occupant.

10. Apparatus (120) for controlling at least one function of at least one display device (130) for an interior of a vehicle (100), wherein the vehicle (100) has at least one vehicle camera (110), wherein the apparatus (120) has the following features:
a device for determining whether a viewing direction of at least one vehicle occupant, as detected by means of the at least one vehicle camera (110), is directed to a device region of the interior of the vehicle (100) in which the at least one display device (130) is installed; and
a device for controlling the at least one display device (130) in a first display mode if the detected viewing direction of the at least one vehicle occupant is directed to the device region in order to control the at least one function of the at least one display device (130), wherein a display brightness, an operating state and/or a residence time in an operating state of the at least one display device (130) is/are controlled, wherein the operating state represents a switched-on or switched-off state of the display unit,
and wherein, in the determining device, viewing directions of a plurality of vehicle occupants are detected in order to establish an assignment between vehicle occupants and display devices (130), wherein, in the controlling device, a brightness of a display, a switching-off or an activation of a display device (130) assigned to the viewing direction is/are controlled, or wherein, in the controlling device, a change between a single-user mode and a multi-user mode is controlled on the basis of the viewing direction of the vehicle occupant.

11. Computer program product having program code for carrying out a method (200) according to one of Claims 1 to 9 when the program is executed on an apparatus (120).

## Revendications

1. Procédé (200) pour commander au moins une fonction d'au moins un appareil d'affichage (130) pour un habitacle d'un véhicule (100), le véhicule (100) possédant au moins une caméra de véhicule (110), le procédé (200) comprenant les étapes suivantes :
détermination (220) si une direction d'observation d'au moins un passager du véhicule, reconnue au moyen de l'au moins une caméra de véhicule (110), est orientée sur une zone d'appareil de l'habitacle du véhicule (100) dans laquelle est installé l'au moins un appareil d'affichage (130) ; et
pilotage (240) de l'au moins un appareil d'affichage (130) dans un premier mode d'affichage, lorsque la direction d'observation reconnue de l'au moins un passager du véhicule est orientée sur la zone d'appareil, en vue de commander l'au moins une fonction de l'au moins un appareil d'affichage (130), une luminosité d'affichage, un état de fonctionnement et/ou un temps de séjour dans un état de fonctionnement de l'au moins un appareil d'affichage (130) étant commandé, l'état de fonctionnement représentant un état en marche ou arrêté de l'unité d'affichage (130),
et les directions d'observation de plusieurs passagers du véhicule étant reconnues dans l'étape de détermination (220), afin d'établir une association entre les passagers du véhicule et les appareils d'affichage (130), une luminosité d'un affichage, une mise à l'arrêt ou une activation d'un appareil d'affichage (130) associé à la direction d'observation étant commandée à l'étape de pilotage (240).

2. Procédé (200) selon la revendication 1, **caractérisé en ce qu'**à l'étape de pilotage (240), l'au moins un appareil d'affichage (130) est piloté dans un deuxième mode d'affichage lorsque la direction d'observation reconnue de l'au moins un passager du véhicule n'est pas orientée sur la zone d'appareil.

3. Procédé (200) selon l'une des revendications précédentes, **caractérisé en ce qu'**à l'étape de détermination (220), il est également déterminé si la direction d'observation reconnue de l'au moins un passager du véhicule est orientée sur la zone d'appareil à l'intérieur d'une plage de tolérance autour de la zone d'appareil.

4. Procédé (200) selon l'une des revendications précédentes, **caractérisé en ce qu'**à l'étape de pilotage (240) de l'au moins un appareil d'affichage (130), une interface utilisateur graphique de l'au moins un appareil d'affichage (130) est pilotée dans un mode d'affichage.

5. Procédé (200) selon l'une des revendications précédentes, **caractérisé en ce qu'**à l'étape de détermination (220), il est également déterminé si la direction d'observation reconnue de l'au moins un passager du véhicule se déplace dans la zone d'appareil ou hors de la zone d'appareil.

6. Procédé (200) selon la revendication 5, **caractérisé en ce qu'**à l'étape de pilotage (240) de l'au moins un appareil d'affichage, le mode d'affichage est modifié lorsque la direction d'observation reconnue de l'au moins un passager du véhicule se déplace dans la zone d'appareil ou hors de la zone d'appareil.

7. Procédé (200) selon la revendication 6, **caractérisé en ce que** dans l'étape de pilotage (240) le mode d'affichage est modifié après écoulement d'un temps antirebond.

8. Procédé (200) selon l'une des revendications précédentes, **caractérisé par** une étape de reconnaissance (210) d'une direction d'observation d'au moins un passager du véhicule au moyen de l'au moins une caméra de véhicule (110).

9. Procédé (200) selon l'une des revendications précédentes, **caractérisé en ce qu'**à l'étape de détermination (220), il est déterminé que plusieurs passagers du véhicule partagent des contenus affichés sur un appareil d'affichage (130), à l'étape de pilotage (240) étant pris en compte quel passager du véhicule est associé à quel contenu affiché sur l'appareil d'affichage (130) ou à un contenu affiché sur celui-ci ou un basculement entre un mode mono- ou multi-utilisateurs étant piloté à l'étape de pilotage (240) en fonction de la direction d'observation du passager du véhicule.

10. Arrangement (120) pour commander au moins une fonction d'au moins un appareil d'affichage (130) pour un habitacle d'un véhicule (100), le véhicule (100) possédant au moins une caméra de véhicule (110), l'arrangement (120) possédant les caractéristiques suivantes :
un dispositif pour déterminer si une direction d'observation d'au moins un passager du véhicule, reconnue au moyen de l'au moins une caméra de véhicule (110), est orientée sur une zone d'appareil de l'habitacle du véhicule (100) dans laquelle est installé l'au moins un appareil d'affichage (130) ; et
un dispositif pour piloter l'au moins un appareil d'affichage (130) dans un premier mode d'affichage, lorsque la direction d'observation reconnue de l'au moins un passager du véhicule est orientée sur la zone d'appareil, en vue de commander l'au moins une fonction de l'au moins un appareil d'affichage (130), une luminosité d'affichage, un état de fonctionnement et/ou un temps de séjour dans un état de fonctionnement de l'au moins un appareil d'affichage (130) étant commandé, l'état de fonctionnement représentant un état en marche ou arrêté de l'unité d'affichage,
et des directions d'observation de plusieurs passagers du véhicule étant reconnues dans le dispositif de détermination, afin d'établir une association entre les passagers du véhicule et les appareils d'affichage (130), une luminosité d'un affichage, une mise à l'arrêt ou une activation d'un appareil d'affichage (130) associé à la direction d'observation étant commandée dans le dispositif de pilotage ou un basculement entre un mode mono- ou multi-utilisateurs étant piloté dans le dispositif de pilotage en fonction de la direction d'observation du passager du véhicule.

11. Produit de programme informatique comprenant un code de programme destiné à mettre en oeuvre un procédé (200) selon l'une des revendications 1 à 9 lorsque le programme est exécuté sur un arrangement (120).
